Europäisches Patentamt

European Patent Office

Office européen des brevets

(19)

(11) Veröffentlichungsnummer : **0 075 243**
**B1**

(12)  EUROPÄISCHE PATENTSCHRIFT

(45) Veröffentlichungstag der Patentschrift :
20.08.86

(21) Anmeldenummer : 82108429.0

(22) Anmeldetag : 13.09.82

(51) Int. Cl.⁴ : **C 23 G   1/36**, B 01 D 17/04,
**C 02 F   1/00**

(54) Verfahren zur Regenerierung wässriger Entfettungs- und Reinigungslösungen.

(30) Priorität : 19.09.81 DE 3137340

(43) Veröffentlichungstag der Anmeldung :
30.03.83 Patentblatt 83/13

(45) Bekanntmachung des Hinweises auf die Patenterteilung : 20.08.86 Patentblatt 86/34

(84) Benannte Vertragsstaaten :
AT DE

(56) Entgegenhaltungen :
DE-A- 1 517 723
DE-A- 2 042 310
CHEMICAL ABSTRACTS, Band 83, Nr. 4, 28. Juli 1975,
Seite 294, Nr. 32762e, Columbus, Ohio, USA
METAL FINISHING ABSTRACTS, Band 18, Nr. 3, 6.
Mai/Juni 1976, Seite 101
Die Akte enthält technische Angaben, die nach dem
Eingang der Anmeldung eingereicht wurden und die
nicht in dieser Patentschrift enthalten sind.

(73) Patentinhaber : Henkel Kommanditgesellschaft auf
Aktien
Postfach 1100 Henkelstrasse 67
D-4000 Düsseldorf-Holthausen (DE)

(72) Erfinder : Bürger, Helga
Dorfstrasse 10
D-4006 Erkrath 2 (DE)
Erfinder : Rossmann, Christian
Koplpingstrasse 3
D-4018 Langenfeld (DE)

**Beschreibung**

Gegenstand der Erfindung ist ein Verfahren zur Regenerierung alkalischer, Phosphate und/oder Silikate oder neutraler, Phosphate enthaltender Reinigungslösungen, die mit emulgierten mineralischen und/oder nativen Ölen verunreinigt sind.

Für die Entfettung und Reinigung im industriellen Bereich, insbesondere von metallischen Oberflächen, werden wäßrige Lösungen verwendet, die Tenside und sogenannte Buildersubstanzen, wie Alkalihydroxide, Alkalicarbonate, Borate, Komplexbildner, anorganische und organische Korrosionsschutzmittel und besonders Silikate und/oder Phosphate enthalten. Bei der Verwendung werden diese durch Mineralöle und/oder native Öle, denen Emulgatoren, Korrosionsschutzmittel und andere öladditive zugesetzt sein können, verunreinigt. Durch die aufgenommenen Verunreinigungen, die durch den evtl. Emulgatorgehalt im Öl und die Tenside des Reinigungsmittels in der Lösung emulgiert werden, wird die wäßrige Lösung in ihrer Wirksamkeit beeinträchtigt und diese schließlich unwirksam. Die Lösungen müssen dann erneuert werden. Vor dem Ablassen der gebrauchten Lösungen müssen diese, wenn sie alkalisch sind, neutralisiert und entsprechend den Vorschriften von Ölen befreit werden. Mit der Neutralisation ist im allgemeinen keine ausreichende Entölung verbunden. Es muß dann eine Emulsionsspaltung vorgenommen werden. Dies kann nach verschiedenen Verfahren, z. B. durch Erniedrigung des pH-Wertes auf ca. 1, Aussalzen der Lösung oder Zusatz von Flockungsmitteln, wie Aluminium- oder Eisensalzen, im sauren Bereich und erneuter Neutralisation erfolgen. Bei dem Ablassen der Reinigungslösung und der Abwasseraufbereitung sind die Inhaltsstoffe der Reinigungslösung verloren. Deshalb erscheint es vorteilhaft, gebrauchte Reinigungslösungen zu regenerieren, um sie wieder zu verwenden.

Eine Regenerierung wäßriger Entfettungslösungen ist mit Hilfe der Ultrafiltration und von Zentrifugalseparatoren möglich. Mit Zentrifugalseparatoren können jedoch nur Entfettungslösungen regeneriert werden, bei denen die Öle und Verunreinigungen nicht stabil emulgiert sind. Außerdem ist bei diesem Verfahren, wie auch bei der Ultrafiltration, ein erheblicher apparativer Aufwand erforderlich. Dies trifft auch deshalb zu, weil in vielen Fällen die Verunreinigung nicht nur aus organischen Substanzen, sondern auch aus wasserunlöslichen Partikeln besteht.

In der DE-A-20 42 310 wird ein Verfahren sowie ein Mittel zur Abtrennung von Öl aus wäßrigen ölhaltigen Gemischen, insbesondere Abwässern, beschrieben. Die Mittel bestehen aus einer wäßrigen Lösung von Eisen-(III)- und Calciumsalzen, wobei das Gewichtsverhältnis zwischen Calcium und Eisen 1,5 : 1 bis 5 : 1 beträgt, und enthalten vorzugsweise eine anorganische Säure. Bei der Anwendung derartiger Mittel wird der pH-Wert des ölhaltigen Gemisches auf Werte zwischen 3 und 10,5 eingestellt, die Salzlösung zugegeben, so daß die Konzentration an Eisen und Calcium im Bereich von 10 bis 3 000 ppm liegt, und nach Abscheiden der Ölphase dieselbe abgetrennt. Die Ölphase enthält die zugesetzten Calcium- und Eisensalze sowie gegebenenfalls im ölhaltigen Gemisch enthaltene oberflächenaktive Substanzen. Ein Zusatz von Calciumsalzen alleine führt nicht zu einer Abscheidung des Öls.

Aus Chemical Abstracts, Vol. 83, Nr. 4 (1975), Seite 294, Abstract 32 762 e, war es bekannt, verbrauchte alkalische Entfettungsbäder mit Kalkmilch (60 % CaO) zu behandeln, um so die ölhaltigen Emulsionen zu brechen und die in den Bädern enthaltenen Alkalimetallcarbonate, -silikate und -phosphate in unlösliche Salze zu überführen. Die von den Verunreinigungen befreiten Bäder können erneut Verwendung finden.

Gegenstand der vorliegenden Erfindung ist demgegenüber ein Verfahren zum Regenerieren wäßriger Entfettungs- und Reinigungslösungen, die

a) alkalisch sind und Phosphate und/oder Silikate enthalten oder

b) neutral sind und Phosphate enthalten und

c) mit emulgierten mineralischen und/oder nativen Ölen verunreinigt sind,
unter Verwendung von Verbindungen des Calciums, welches dadurch gekennzeichnet ist, daß man den Reinigungslösungen, die

d) mindestens 1 g/l Alkalimetallphosphate und/oder Alkalimetallsilikate sowie

e) 0,1 bis 5 g/l nichtionische Tenside sowie gegebenenfalls daneben auch anionische Tenside enthalten, wobei die anionischen Tenside nur in untergeordneten Mengen gegenüber den nichtionogenen vorliegen,

f) unter Beibehaltung ihres pH-Wertes

g) wasserlösliche Calcium- und/oder Magnesiumsalze, in einer Konzentration von 0,3 bis 2 g/l Calciumionen und/oder 0,2 bis 1,2 g/l Magnesiumionen, bezogen auf die gesamte Reinigungslösung, zusetzt und

h) nach Absetzen des gebildeten Niederschlages sowie nach Abscheiden einer Ölschicht diese Verunreinigungen von der wäßrigen Phase der verbliebenen Reinigungslösung abtrennt.

Die so regenerierten Reinigungslösungen können erneut verwendet werden.

Die Reinigungs- und Entfettungslösungen, die nach dem erfindungsgemäßen Verfahren zu regenerieren sind, können pH-Werte zwischen 7 und 14 besitzen. Diese können Alkalien, wie Alkalihydroxide, Alkalicarbonate und Alkaliborate, enthalten. Als Buildersubstanzen enthalten sie Phosphate, wie Alkaliorthophosphate, Alkalidiphosphate oder Alkalipolymerphosphate, und/oder Alkalisilikate mit einem Molverhältnis $SiO_2/Na_2O$ beziehungsweise $K_2O$ 1 : 1 bis 4 : 1, vorzugsweise 2 : 1 bis 3,5 : 1. Bei der erfindungsgemäßen Regenerierung dieser Lösungen durch Zusatz löslicher Calcium- und/oder Magnesiumsalze werden nur geringe Mengen dieser Buildersubstanzen verbraucht und gehen verloren. Der überwiegende Anteil der Buildersubstanzen steht nach der Regenerierung wieder für weitere Reinigungsoperationen zur Verfügung. Unter Alkaliphosphate werden im übrigen jeweils die Natrium- oder Kaliumverbindungen verstanden. Weiterhin können zur Erzielung einer guten Entfettungs- und Reinigungswirkung die Lösungen nichtionogene Tenside in Mengen von 0,1 bis 5 g/l, vorzugsweise 0,5 bis 3 g/l enthalten. Die Gegenwart von anionischen Tensiden ist nicht zweckmäßig, da hierdurch das gute Absetzvermögen der sich bildenden Niederschläge und klares Abscheiden der Ölschicht beeinträchtigt wird. Sie sollten daher keine Verwendung finden, oder nur in untergeordneten Mengen gegenüber den nichtionogenen Tensiden vorliegen.

Als nichtionogene Tenside kommen insbesondere Anlagerungsprodukte von Ethylenoxid und gegebenenfalls Propylenoxid an Fettalkohole, Fettsäuren, Fettamine, insbesondere mit 12 bis 18 Kohlenstoffatomen, im Alkylrest, sowie Alkylamine mit 6 bis 15 Kohlenstoffatomen in Betracht. Auch können Blockpolymerisate aus Ethylenoxid und Propylenoxid Anwendung finden.

Die alkalischen Reinigungslösungen enthalten die Buildersubstanzen, zum Beispiel Phosphate und/oder Silikate, im allgemeinen in Konzentrationen zwischen 10 und 50 g/l, in Einzelfällen auch noch höhere Konzentrationen.

Als lösliche Calciumsalze eigenen sich insbesondere Calciumnitrat und Calciumchlorid. Als lösliche Magnesiumsalze kommen Magnesiumnitrat, Magnesiumsulfat und Magnesiumchlorid in Betracht. Diese löslichen Salze werden den zu regenerierenden Reinigungslösungen in Konzentrationen von 0,3 bis 2 g/l, berechnet als Calciumionen, beziehungsweise 0,2 bis 1,2 g/l, berechnet als Magnesiumionen, zugesetzt ; vorzugsweise werden Konzentrationen zwischen 0,6 bis 1,2 g/l, berechnet als Calcium-, beziehungsweise 0,35 bis 0,7 g/l als Magnesiumionen, angewendet. Hierbei können auch Gemische von Calcium- und Magnesiumsalzen verwendet werden. Die löslichen Calcium- und Magnesiumsalze werden den zu regenerierenden Reinigungslösungen in Form wäßriger Lösungen zugegeben. Dies kann zum Beispiel zu betriebswarmen Lösungen, aber auch zu Lösungen von Raumtemperatur erfolgen. Nach guter Durchmischung wird der sich bildende Niederschlag aus Calcium- und/oder Magnesiumphosphaten beziehungsweise Magnesiumsilikaten sich absetzen und die Öle sich abscheiden lassen. Zur Verbesserung der Sedimentation des entstandenen Niederschlages kann zusätzlich ein Flockungsmittel auf Polyelektrolytbasis, vorzugsweise Polyacrylamide, zugegeben werden. Nach Abziehen der Ölschicht und Entfernen des Niederschlages kann die Reinigungslösung wieder verwendet werden. Der durch die Regeneration verlorene Lösungsanteil wird durch Zugabe von Wasser und Nachschärfen mit Reinigungsmittel bis zur Soll-Konzentration ausgeglichen. Die Reinigungslösung ist im allgemeinen wieder voll wirksam ; nur in Einzelfällen ist eine Ergänzung des Tensidgehaltes erforderlich. Eine pH-Wert-Veränderung der Reinigungslösung, die zu einer Beeinträchtigung der Reinigungswirkung führen würde, findet bei der Regeneration nicht statt.

Beispiele

Der Anmeldungsgegenstand wird durch die nachfolgenden Beispiele erläutert ohne hierauf beschränkt zu sein. Bei den Angaben in % handelt es sich, sofern nichts anderes angegeben wird, stets um Gewichts- %.

1. Eine 2 %ige Lösung eines « Phosphatreinigers », der

50 % Natriumdiphosphat

30 % Natriumorthophosphat

10 % Natriumtriphosphat und

10 % Anlagerungsprodukt von 10 Mol Ethylenoxid an Nonylphenol

enthielt und in der 10 g/l Mineralöl einemulgiert waren, wurde unter Rühren mit 20 ml/l einer 15 %igen Magnesiumsulfatlösung, entsprechend 0,6 g/l Magnesiumionen, versetzt.

Die Sedimentation des Niederschlages wird beschleunigt, wenn der Lösung ein organisches Flockungshilfsmittel, zum Beispiel auf Basis von Polyacrylamide (Molgewicht $8 \cdot 10^6$) in Mengen von 0,05 bis 2 g/m³ zugesetzt wird. Nach dem Absetzen der Flocke und Abziehen der sich an der Oberfläche abscheidenden Mineralölschicht konnte die Reinigungslösung, die praktisch kein Mineralöl mehr enthielt, weiter verwendet werden.

2. Eine 2 %ige Lösung eines « Phosphatreinigers », wie in Beispiel 2 beschrieben, wurde mit 10 g/l Olivenöl belastet. Unter Rühren wurden 30 ml/l einer 20 %igen Calciumnitratlösung, entsprechend 1,46 g/l Calciumionen, zugesetzt. Dadurch wurde die Emulsion gebrochen. Nach Abziehen des Öls und Entfernung des Niederschlages war die Reinigungslösung wieder voll funktionsfähig.

3. In einer 3 %igen Lösung eines « Silikat/Phosphatreinigers » mit der Zusammensetzung :

50 % Natriummetasilikat

26 % Natriumdiphosphat

10 % Natriumhydroxid

3 % Anlagerungsprodukt von 10 Mol Ethylenoxid an Fettamin mit 12 bis 16 Kohlenstoffatomen

1 % Alkylsulfonat (Alkylrest $C_{12}$ bis $C_{16}$), Rest Wasser waren 10 g/l eines halbsynthetischen Kühlschmiermittels sehr stabil emulgiert. Diese Emulsion wurden 50 ml/l einer Lösung zugesetzt, die 15 % Calciumnitrat und 10 % Magnesiumnitrat, entsprechend 1,83 g/l Calciumionen und 0,8 g/l Magnesiumionen, enthielt, zugefügt. Nach Abtrennen der sich abscheidenden Ölschicht und Entfernen des Niederschlages war die Reinigungslösung, die nur noch weniger als 300 mg/l Mineralöl enthielt, wieder voll funktionsfähig und konnte für weitere Reinigungsoperationen verwendet werden.

4. Nach einer Standzeit von 10 Tagen enthielt eine neutrale Reinigungslösung mit 0,5 % Natriumdiphosphat und 0,5 % eines Anlagerungsproduktes von 10 Mol Ethylenoxid an Fettamin mit 12 bis 16 Kohlenstoffatomen 20 g/l Bohröl (Basis : Mineralöl, Petroleumsulfonat, nichtionische Tenside und Seife) stabil emulgiert. Die Emulsion ließ sich weder in einem Separator trennen noch durch Zusatz von 7 g/l Aluminiumsulfat spalten. Nach Zusatz von 30 ml/l einer 20 %igen Calciumnitratlösung, entsprechend 1,46 g/l Calciumionen, spaltete die Emulsion und das Mineralöl schied sich an der Oberfläche ab. Nach Abziehen der Ölschicht und Entfernung des Niederschlages enthielt die Reinigungslösung nur noch 350 mg/l Bohröl und konnte nach entsprechender Aufschärfung ohne Wirkungsverlust für einen neuen Reinigungszyklus verwendet werden.

**Patentansprüche**

1. Verfahren zum Regenerieren wäßriger Entfettungs- und Reinigungslösungen, die
a) alkalisch sind und Phosphate und/oder Silikate enthalten oder
b) neutral sind und Phosphate enthalten und
c) mit emulgierten mineralischen und/oder nativen Ölen verunreinigt sind, unter Verwendung von Verbindungen des Calciums, dadurch gekennzeichnet, daß man den Reinigungslösungen, die
d) mindestens 1 g/l Alkalimetallphosphate und/oder Alkalimetallsilikate sowie
e) 0,1 bis 5 g/l nichtionische Tenside sowie gegebenenfalls daneben auch anionische Tenside enthalten, wobei die anionischen Tenside nur in untergeordneten Mengen gegenüber den nichtionogenen vorliegen,
f) unter Beibehaltung ihres pH-Wertes
g) wasserlösliche Calcium- und/oder Magnesiumsalze, in einer Konzentration von 0,3 bis 2 g/l Calciumionen und/oder 0,2 bis 1,2 g/l Magnesiumionen, bezogen auf die gesamte Reinigungslösung, zusetzt und
h) nach Absetzen des gebildeten Niederschlages sowie nach Abscheiden einer Ölschicht diese Verunreinigungen von der wäßrigen Phase der verbliebenen Reinigungslösung abtrennt.

2. Verfahren nach Anspruch 1, dadurch gekennzeichnet, daß man den Reinigungslösungen als wasserlösliche Calciumsalze Nitrate und/oder Chloride sowie als wasserlösliche Magnesiumsalze Nitrate, Sulfate und/oder Chloride zusetzt.

3. Verfahren nach Anspruch 1 und 2, dadurch gekennzeichnet, daß man den Reinigungslösungen wasserlösliche Calcium- und/oder Magnesiumsalze in einer Konzentration von 0,6 bis 1,2 g/l Calciumionen und/oder 0,35 bis 0,7 g/l Magnesiumionen, bezogen auf die gesamte Reinigungslösung, zusetzt.

4. Verfahren nach Anspruch 1 bis 3, dadurch gekennzeichnet, daß man den Reinigungslösungen Flockungshilfsmittel auf Basis von Polyelektrolyten zusetzt.

**Claims**

1. A process for regenerating aqueous degreasing and cleaning solutions which
a) are alkaline and contain phosphates and/or silicates or
b) are neutral and contain phosphates and
c) are soiled with emulsified mineral and/or native oils, using compounds of calcium, characterized in that to the cleaning solutions which contain
d) at least one 1 g/l alkali metal phosphates and/or alkali metal silicates and
e) from 0.1 to 5 g/l nonionic surfactants and, optionally, anionic surfactants also, the anionic surfactants being present in only minor quantities compared with the nonionic surfactants, are added,
f) with retention of their pH-value,
g) water-soluble calcium and/or magnesium salts in a concentration of from 0.3 to 2 g/l calcium ions and/or from 0.2 to 1.2 g/l magnesium ions, based on the cleaning solution as a whole, and
h) after the deposit formed has settled and after an oil phase has been separated off, these impurities are separated from the aqueous phase of the remaining cleaning solution.

2. A process as claimed in Claim 1, characterized in that nitrates and/or chlorides and nitrates, sulfates and/or chlorides are added as water-soluble calcium salts and water-soluble magnesium salts, respectively, to the cleaning solutions.

3. A process as claimed in Claims 1 and 2, characterized in that water-soluble calcium and/or magnesium salts are added to the cleaning solutions in a concentration of from 0.6 to 1.2 g/l calcium ions and/or 0.35 to 0.7 g/l magnesium ions, based on the cleaning solution as a whole.

4. A process as claimed in Claims 1 to 3, characterized in that flocculation aids based on polyelectrolytes are added to the cleaning solutions.

**Revendications**

1. Procédé de régénération de solutions aqueuses de dégraissage et de nettoyage
a) qui sont alcalines et contiennent des phosphates et/ou des silicates, ou
b) qui sont neutres et contiennent des phosphates et
c) qui sont contaminées avec des huiles minérales et/ou naturelles émulsifiées, avec utilisation de composés de calcium, caractérisé en ce qu'aux solutions de nettoyage qui contiennent
d) au moins 1 g/litre de phosphates de métaux alcalins et/ou de silicates de métaux alcalins, de même que
e) 0,1 à 5 g/litre de tensioactifs non ioniques ainsi qu'éventuellement à côté également des tensioactifs anioniques, les tensioactifs anioniques ne se présentant qu'en des quantités mineures par rapport aux non-ionogènes,

f) tout en maintenant leur valeur de pH,

g) on ajoute des sels solubles dans l'eau de calcium et/ou de magnésium, à une concentration de 0,3 à 2 g/litre d'ions calcium et/ou de 0,2 à 1,2 g/litre d'ions magnésium par rapport à la solution totale de nettoyage et en ce que

h) après dépôt du précipité formé, de même qu'après séparation d'une couche d'huile, on sépare ces impuretés d'avec la phase aqueuse de la solution de nettoyage restante.

2. Procédé selon la revendication 1, caractérisé en ce qu'on ajoute aux solutions de nettoyage en tant que sels de calcium solubles dans l'eau des nitrates et/ou des chlorures de même qu'en tant que sels de magnésium solubles dans l'eau des nitrates, des sulfates et/ou des chlorures.

3. Procédé selon les revendications 1 et 2, caractérisé en ce qu'on ajoute aux solutions de nettoyage des sels solubles dans l'eau de calcium et/ou de magnésium à une concentration de 0,6 à 1,2 g/litre d'ions calcium et/ou de 0,35 à 0,7 g/litre d'ions magnésium par rapport à la solution de nettoyage totale.

4. Procédé selon les revendications 1 à 3, caractérisé en ce qu'on ajoute aux solutions de nettoyage des auxiliaires de floculation à base de polyélectrolytes.